# EUROPEAN PATENT APPLICATION

(11) **EP 4 844 258 A1**
(43) Date of publication of application: **25.11.2026**
(21) Application number: 26179391.3
(22) Date of filing: 18.05.2026
(51) Int. Cl.: F16M 13/00, F16B 2/10, F16M 11/04, F16M 11/38, H04M 1/04

(54) **FOLDING BRACKET**

(30) Priority: 22.05.2025 CN 202521020204 U
(71) Applicant: Shenzhen Lamiku Technology Co., Ltd, Shenzhen, Guangdong 518000 (CN)
(72) Inventor: ZHANG, Bo, Shenzhen, 518000 (CN); LI, Lianzeng, Shenzhen, 518000 (CN); LUO, Shenxiang, Shenzhen, 518000 (CN)
(74) Representative: Cabinet Netter

(57) **Abstract**

A folding bracket (10), which includes a main body (20), a first clamp arm (21), and a second clamp arm (22). The first and second clamp arms (21, 22) are rotatably connected to the main body (20) and configured to clamp two sides of an electronic device in a width direction. The folding bracket (10) also includes a support component (23) configured to support a bottom of the electronic device, and the support component (23) is rotatably connected to the main body (20). The folding bracket (10) provided by the present application has the advantages of convenient integrated folding and storage, saving space, and reducing packaging and transportation costs.

## Description

### TECHNICAL FIELD

The present application relates to the field of brackets, and more particularly to a folding bracket.

### BACKGROUND

With the continuous advancement of modern technology and the continuous improvement of people's living standards, electronic devices are increasingly widely used in daily life, becoming indispensable tools in people's routines. With the advancement of wireless communication technology, electronic devices are developing towards diversification, and the electronic devices' usage scenarios have spread to various places, large and small.

Electronic devices may be used on transportation tools (such as cars, bicycles, electric-assist vehicles, and motorcycles, etc.). On these transportation tools, electronic devices may be used for navigation and audio entertainment. In practice, a vehicle-mounted bracket is typically required to securely affix the electronic device. Existing cycling brackets are too large in size, have high packaging and transportation costs, cannot be folded, and are not convenient to carry. These brackets, when not in use, are prone to taking up space or affecting the user's riding experience.

### SUMMARY

An objective of the present application is to provide a folding bracket which is convenient for integrated folding and storage, thus saving space and reducing packaging and transportation costs.

In accordance with an embodiment of the present application, a folding bracket is provided which includes a main body, a first clamp arm, and a second clamp arm. The first and second clamp arms are rotatably connected to the main body and configured to clamp two sides of an electronic device in a width direction, respectively. The folding bracket also includes a support component configured to support a bottom of the electronic device, and the support component is rotatably connected to the main body. Preferably, the first clamp arm, the second clamp arm, and the support component are rotatably folded to fit against the main body.

Preferably, a first rotation component is provided on the first clamp arm, a second rotation component is provided on the second clamp arm, and a first rotation shaft and a second rotation shaft are respectively provided on two sides of the main body. The first rotation component is connected to the first rotation shaft, and the second rotation component is connected to the second rotation shaft.

Preferably, the support component is connected to a bottom of the main body. Preferably, the support component includes a support part and an abutment part that are connected to each other. The abutment part is configured to support the bottom of the electronic device, and an angle is formed between the support part and the abutment part.

Preferably, a third rotation shaft is provided on one side of the abutment part, and a third rotation component is provided on the bottom of the main body. The third rotation shaft is connected to the third rotation component.

Preferably, the support component is disposed on the first clamp arm and/or the second clamp arm, extending along one corner of the first clamp arm and/or the second clamp arm, forming an L-shape with the first or second clamp arm.

Preferably, the first clamp arm, the second clamp arm, and the support component are concave to form a receiving groove, and the receiving groove is configured to accommodate side and bottom surfaces of the electronic device.

The technical solutions provided by the embodiments of the present application may include the following beneficial effects: the folding bracket includes a main body, a first clamp arm, and a second clamp arm. The first and second clamp arms are rotatably connected to the main body. The first and second clamp arms are configured to clamp two sides of an electronic device in a width direction, respectively. The folding bracket also includes a support component configured to support a bottom of the electronic device. The support component is rotatably connected to the main body. The first clamp arm, the second clamp arm, and the support component can be folded onto the main body, facilitating integrated folding and storage. When not in use, the folding bracket can be folded without occupying space. This saves space and reduces packaging and transportation costs.

### BRIEF DESCRIPTION OF THE DRAWINGS

To illustrate the technical solutions of embodiments of the present application more clearly, the drawings required for describing the embodiments will be briefly introduced below. It will be apparent to a person skilled in the art that the drawings described below are merely some embodiments of the present application, and other drawings may be derived from these drawings without exerting creative efforts.
FIG. 1 is a three-dimensional structural schematic diagram of a folding bracket according to an embodiment of the present application;
FIG. 2 is a schematic diagram of the folding bracket in a folded state according to the embodiment of the present application;
FIG. 3 is a three-dimensional structural schematic diagram of a folding bracket according to another embodiment of the present application;
FIG. 4 is an exploded structural schematic diagram of the folding bracket according to the other embodiment of the present application; and
FIG. 5 is a schematic diagram of the folding bracket in a folded state according to the other embodiment of the present application.

### Reference Numerals:

10 - folding bracket;
20 - main body;
21 - first clamp arm;
22 - second clamp arm;
23 - support component;
231 - support part;
232 - abutment part;
24 - first rotation component;
25 - second rotation component;
26 - first rotation shaft;
27 - second rotation shaft;
28 - third rotation shaft;
29 - third rotation component; and
30 - receiving groove.

### DETAILED DESCRIPTION OF THE EMBODIMENTS

The technical solutions of the embodiments of the present application will be clearly and completely described below with reference to the accompanying drawings. Obviously, the described embodiments are only some embodiments of the present application, not all embodiments of the present application. Based on the embodiments of the present application, all other embodiments obtained by a person skilled in the art without exerting creative effort fall within the protection scope of the present application.

It should also be understood that the terms used in the specification of the present application are only for the purpose of describing specific embodiments and are not intended to limit the present application. Unless the context explicitly indicates otherwise, the singular forms "a," "an," and "the" used throughout this specification and the appended claims are intended to encompass their plural counterparts.

It should also be understood that the term "and/or" as used in this specification and the appended claims refers to any combination and all possible combinations of one or more of the associated listed items, and includes such combinations.

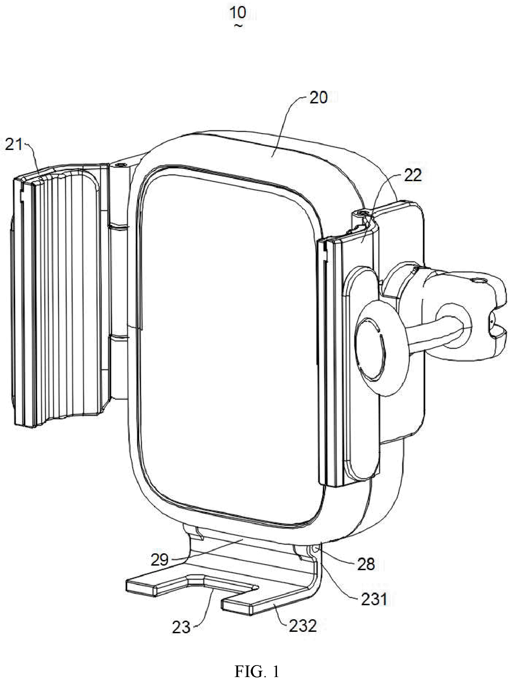

Referring to FIGS. 1-3, the present application provides a folding bracket 10, which includes a main body 20, a first clamp arm 21, and a second clamp arm 22. The first clamp arm 21 and the second clamp arm 22 are rotatably connected to the main body 20. The first clamp arm 21 and the second clamp arm 22 are configured to clamp two sides of an electronic device in a width direction. The folding bracket 10 also includes a support component 23 configured to support a bottom of the electronic device, and the support component 23 is rotatably connected to the main body 20.

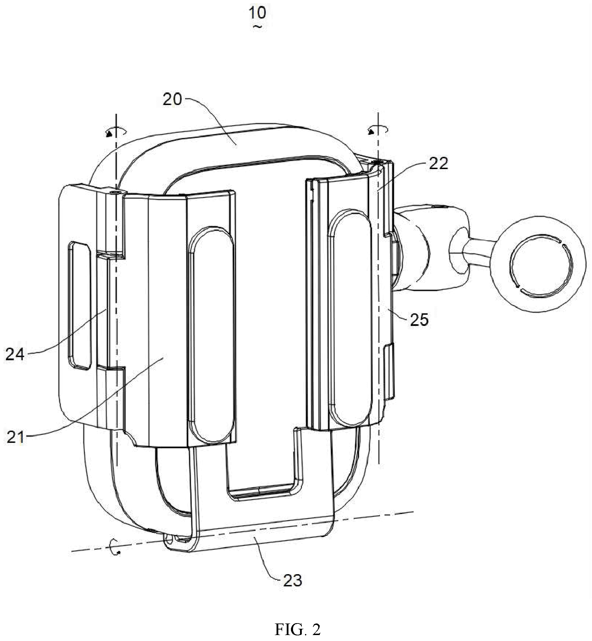

Referring to FIG. 2, the first clamp arm 21, the second clamp arm 22, and the support component 23 are rotatably folded to fit against the main body 20.

A first rotation component 24 is provided on the first clamp arm 21, and a second rotation component 25 is provided on the second clamp arm 22. A first rotation shaft 26 and a second rotation shaft 27 are respectively provided on two sides of the main body 20. The first rotation component 24 is connected to the first rotation shaft 26, and the second rotation component 25 is connected to the second rotation shaft 27. This facilitates the first clamp arm 21 and the second clamp arm 22 to rotate relative to the main body 20.

Referring to FIGS. 1 and 2, in an embodiment of the present application, the support component 23 is connected to a bottom of the main body 20.

The support component 23 includes a support part 231 and an abutment part 232 that are connected to each other. The abutment part 232 is configured to support the bottom of the electronic device, and the support part 231 and the abutment part 232 form an angle. In this embodiment, the support part 231 and the abutment part 232 form a 90° angle relative to each other.

A third rotation shaft 28 is provided on one side of the abutment part 232, and a third rotation component 29 is provided at the bottom of the main body 20. The third rotation shaft 28 is connected to the third rotation component 29. This facilitates the support component 23 to rotate relative to the main body 20.

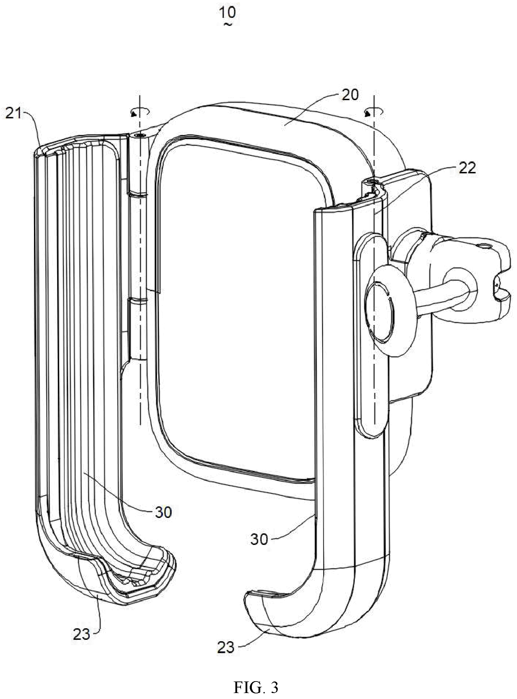

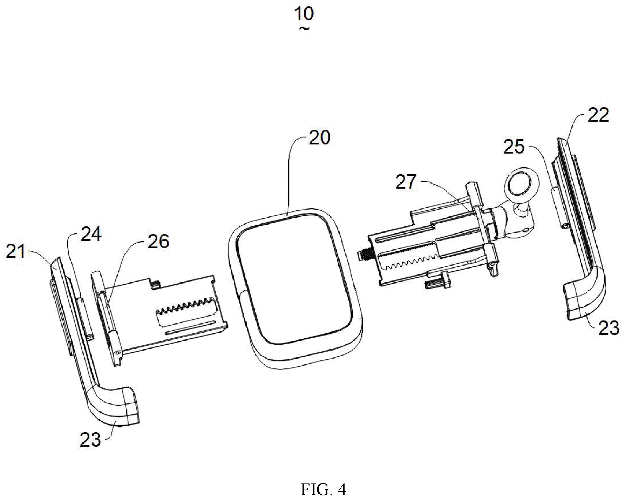

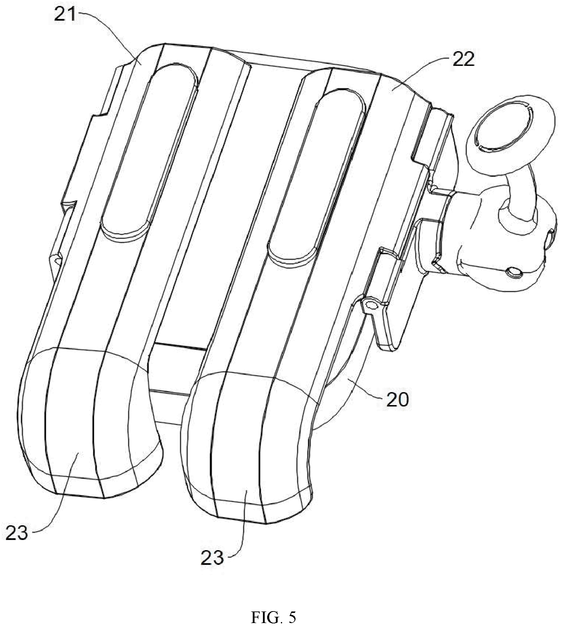

Referring to FIGS. 3-5, in another embodiment of the present application, the support component 23 is disposed on the first clamp arm 21 and/or the second clamp arm 22. The support component 23 extends along a corner of the first clamp arm 21 and/or a corner of the second clamp arm 22, forming an L-shape with the first clamp arm 21 or the second clamp arm 22.

The first clamp arm 21, the second clamp arm 22 and the support component 23 are concave to form a receiving groove 30, which is configured to accommodate the side and bottom surfaces of the electronic device.

The technical solution provided in the embodiments of the present application may include the following beneficial effects: the folding bracket includes a main body, a first clamp arm, and a second clamp arm. The first and second clamp arms are rotatably connected to the main body. The first and second clamp arms are configured to clamp two sides of an electronic device in the width direction. The folding bracket also includes a support component configured to support a bottom of the electronic device. The support component is rotatably connected to the main body. The first clamp arm, the second clamp arm, and the support component can be folded onto the main body, which is convenient for integrated folding and storage. This minimizes the spatial footprint when not in use and simultaneously reduces packaging and transportation costs.

The foregoing description represents only some exemplary embodiments of the present application. The protection scope of the present application is not confined to these particular implementations. Persons skilled in the art may readily conceive of various equivalent modifications or substitutions within the technical scope disclosed in the present application, and these modifications or substitutions should all be covered within the protection scope of the present application. Therefore, the protection scope of the present application shall be determined solely by the language of the claims.

## Claims

1. A folding bracket (10), comprising:
a main body (20),
a first clamp arm (21), and a second clamp arm (22), the first clamp arm (21) and the second clamp arm (22) being rotatably connected to the main body (20), wherein the first clamp arm (21) and the second clamp arm (22) are configured to clamp two sides of an electronic device along a width direction, respectively; and
a support component (23), configured to support a bottom of the electronic device, the support component (23) being rotatably connected to the main body (20).

2. The folding bracket (10) according to claim 1, wherein the first clamp arm (21), the second clamp arm (22), and the support component (23) are rotatably folded to fit against the main body (20).

3. The folding bracket (10) according to claim 2, wherein a first rotation component (24) is provided on the first clamp arm (21), a second rotation component (25) is provided on the second clamp arm (22), a first rotation shaft (26) and a second rotation shaft (27) are respectively provided on two sides of the main body (20), the first rotation component (24) is connected to the first rotation shaft (26), and the second rotation component (25) is connected to the second rotation shaft (27).

4. The folding bracket (10) according to claim 1, wherein the support component (23) is connected to a bottom of the main body (20).

5. The folding bracket (10) according to claim 4, wherein the support component (23) comprises a support part (231) and an abutment part (232) that are connected to each other, the abutment part (232) is configured to support the bottom of the electronic device, and an angle is formed between the support part (231) and the abutment part (232).

6. The folding bracket (10) according to claim 5, wherein a third rotation shaft (28) is provided on one side of the abutment part (232), a third rotation component (29) is provided at the bottom of the main body (20), and the third rotation shaft (28) is connected to the third rotation component (29).

7. The folding bracket (10) according to claim 1, wherein the support component (23) is disposed on the first clamp arm (21) or the second clamp arm (22), the support component (23) extends along a corner of the first clamp arm (21) or the second clamp arm (22), forming an L-shape with the first clamp arm (21) or the second clamp arm (22), or
the support component (23) is disposed on both the first clamp arm (21) and the second clamp arm (22), the support component (23) extends along the corner of the first clamp arm (21) and the corner of the second clamp arm (22), forming an L-shape with each of the first clamp arm (21) and the second clamp arm (22).

8. The folding bracket (10) according to claim 7, wherein the first clamp arm (21), the second clamp arm (22), and the support component (23) are concave to form a receiving groove (30), and the receiving groove (30) is configured to accommodate side and bottom surfaces of the electronic device.
